# EUROPEAN PATENT SPECIFICATION

(11) **EP 1 925 852 B1**
(45) Date of publication and mention of the grant of the patent: **28.07.2010**
(21) Application number: 06782861.6
(22) Date of filing: 22.08.2006
(51) Int. Cl.: F16H 25/22, F16H 25/24

(54) **ROLLING-ELEMENT SCREW DEVICE AND METHOD OF ASSEMBLING THE SAME**
SCHRAUBVORRICHTUNG MIT ROLLELEMENTEN UND MONTAGEVERFAHREN DAFÜR
DISPOSITIF DE VIS À ÉLÉMENTS ROULANTS ET PROCÉDÉ POUR L' ASSEMBLER

(30) Priority: 25.08.2005 JP 2005243773
(43) Date of publication of application: 28.05.2008
(73) Proprietor: THK CO., LTD., Shinagawa-ku, Tokyo 141-8503 (JP)
(72) Inventor: MIYAHARA, Soshi, Tokyo 141-8503 (JP)
(74) Representative: Grünecker, Kinkeldey, Stockmair & Schwanhäusser Anwaltssozietät
(86) International application number: PCT/JP2006/316357
(87) International publication number: WO 2007/023780

(56) References cited:
- JP-A- 2000 337 470
- JP-A- 2001 099 256
- JP-A- 2003 343 683
- JP-U- 50 069 815
- JP-U- 59 039 352
- US-A- 4 953 419
- US-A1- 2004 211 280
- US-B1- 6 176 149

## Description

The present invention relates to a rolling-element screw device having a screw shaft, a nut and rolling elements rollably disposed therebetween according to the preamble of claim 1, and also to a method of assembling the same.
Such a rolling-element screw device is already known, for example, from US 6,176,149 B.

As a ball screw having balls rollably disposed between a screw shaft and a nut allows reduction of friction coefficient in rotating the screw shaft relative to the nut as compared with a sliding contact type screw, it has become commercially practical in various fields such as positioning mechanism of machine tools, vehicle steering, guide devices, motion screws and the like. In such a ball screw, a spiral ball rolling groove of the screw shaft and a loaded ball rolling groove of the nut are aligned to form a path, which is filled with a plurality of balls, and the nut is provided with a circulation member for circulating the balls. Once each ball rolls up to an end of the loaded ball rolling groove of the nut, the ball is scooped up into the circulation member. After passing through the circulation member, the ball returns several turns back to the other end of the loaded ball rolling groove.

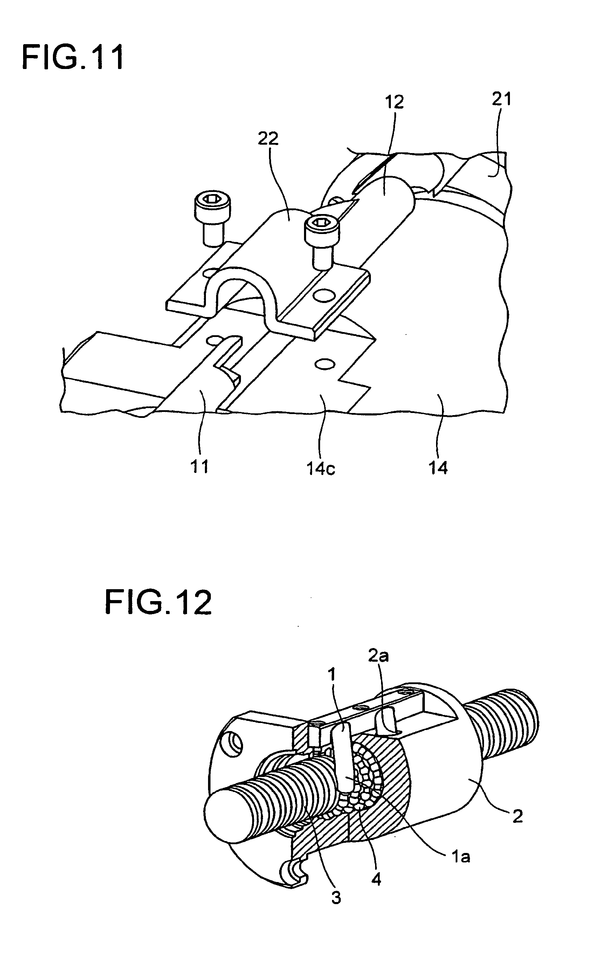

The ball circulation system of the ball screw includes a return pipe type ball circulation system and an end cap type ball circulation system. The return pipe type ball screw adopts a return pipe 1 for ball circulation as illustrated in Fig. 12. Each ball 4 is scooped up from the outer surface of the screw shaft 3 by the return pipe 1 and passes through the return pipe to return to the original position. The return pipe 1 is first mounted on the side surface of the nut main body. Then, a pair of leg parts of the return pipe 1 is inserted into holes 2a formed on the side surface of the nut main body 2.

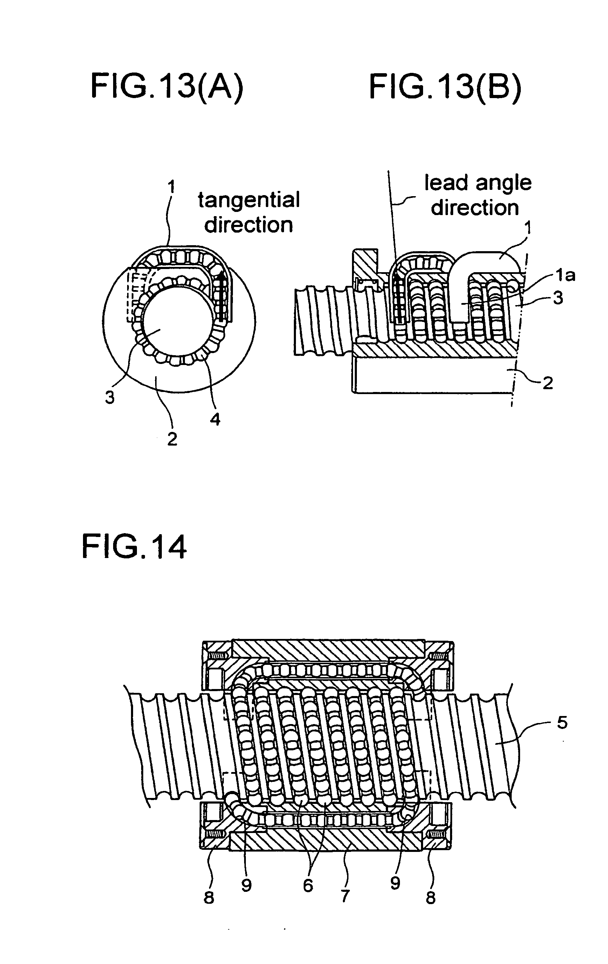

As illustrated in Figs. 13(A) and 13(B), in order to circulate balls 4 smoothly, each ball 4 rolling on the outer surface of the screw shaft is sometimes scooped up in the tangential direction of the spiral ball circulation raceway and in the lead angle direction. When seen from the side surface in Fig. 13(B), paired leg parts 1a of the return pipe 1 are V shaped. In order to prevent interference between the leg parts 1a of the return pipe 1 and the holes 2a of the nut main body 2, it is required to make the holes 2a longer in the side surface of the nut main body 2, which is apt to cause play around each of the leg parts 1a. This is more pronounced as the lead of the screw shaft 3 is larger. An example of a return pipe having leg parts inclined in accordance with the lead of the screw shaft is also disclosed, for example, in the patent document 1, which shows a two-piece return pipe.

Meanwhile, in the end cap type ball screw, as illustrated in Fig. 14, each ball 6 rolling on the outer surface of the screw shaft 5 is scooped up by an end cap 8 attached to one end surface of the nut main body 7, made to pass through the inside of the nut main body 7 and returned onto the outer surface of the screw shaft via an end cap 8 attached to the opposite end surface of the nut main body 7 (for example, see patent document 2). In the end cap type ball screw, the end cap 8 attached to each end surface of the nut main body 7 has a direction change path 9 and a scooping portion formed for scooping balls. With this structure, there is no play caused, even in a ball screw having a large lead, which differs from the case of return pipe type.

Patent document 1: Japanese patent laid-open publication No.3-121341 (US-A-4 953 419)
Patent document 2: WO03/21133A1 (US-A-2004/0211280)

However, such an end cap type ball screw has a circulation member consisting of three members, that is, a nut main body and end caps provided on the respective ends of the nut main body, which shows drawbacks of a high parts count and high possibility of elevation change for ball rolling at two joints of the three components, as compared with a return pipe ball screw. Besides, there is a need to equip the nut main body with a path for ball rolling, which results in that the outer shape of the nut main body is likely to be larger.

Therefore, the present invention has an object to provide a rolling-element screw device capable of offering advantages of both end cap type ball screw and a return pipe type ball screw and belonging to an intermediate new category between these ball screws.

The present invention will now be described below.

The above and other objects of the invention are achieved by a rolling-element screw device according to claim 1 and a method of assembling a rolling-element screw device according to claim 4. Preferred embodiments are claimed in the dependent claims.

According to the invention of claim 1, as the first and second pipes are mounted onto the respective end surfaces of the nut main body, it is possible to prevent play from being introduced around the first and second pipes, in contrast to the return pipe type ball screw of which the return pipe is mounted on the side surface of the nut main body. Moreover, as the circulation member consists of the two members, that is, the first and second pipes, it is possible to realize the ball screw with a lower parts count than that of a conventional end cap type ball screw and to minimize the number of joints of the different parts for movement of rolling elements.

As the first and second pipes are fit into the notches formed in the respective end surfaces of the nut main body, it is more possible to prevent play from being introduced around the first and second pipes.

Moreover, it is possible to downsize the outer shape of the nut main body.

According to the invention of claim 2, it is possible to position the first and second pipes at the mating surfaces thereof.

According to the invention of claim 3, it is possible to mount the first and second pipes onto the nut main body with use of the first and second support members. Besides, as each of the first support members is provided with a protruding portion which conforms to the shapes of the first and second pipes, it is possible to prevent play from being introduced around the first and second pipes.

According to the invention of claim 4, the first and second pipes are first fit to the respective end surfaces of the nut main body and then the first and second pipes are able to be mounted onto the nut main body only by holding tight the first and second pipes with the support members. With this method, assembly is facilitated.

Fig. 1 is a perspective view of a ball screw according to one embodiment of the present invention;
Fig. 2 is an exploded perspective view of the above-described ball screw;
Fig. 3 is a perspective view of a first pipe and a second pipe;
Fig. 4 is a top view of the first and second pipes;
Fig. 5 is a front view of the ball screw;
Fig. 6 is a lateral view of the ball screw;
Fig. 7 is a perspective view illustrating a leg part of the first pipe seen from the inner-diameter side of the nut main body;
Fig. 8 is a view illustrating the leg part tilting seen in the axial direction of the screw shaft;
Fig. 9 is a view illustrating the leg part tilting seen from the lateral side of the screw shaft;
Fig. 10 is a detail view of a first support member;
Fig. 11 is a detail view of a second support member;
Fig. 12 is a perspective view illustrating a conventional return pipe type ball screw;
Figs. 13(A) and 13(B) are views each illustrating ball circulation of a conventional return pipe type ball screw (Fig. 13 (A) illustrating the ball circulation seen in the axial direction of the screw shaft, and Fig. 13(B) illustrating the ball circulation seen from the lateral side of the screw shaft; and
Fig. 14 is a cross-sectional view of a conventional end cap type ball screw.

### DESCRIPTION OF REFERENCE NUMERALS

- 11: first pipe (circulation member)
- 12: second pipe (circulation member)
- 11a: leg part of first pipe
- 12a: leg part of second pipe
- 11c, 12c: first mating surfaces
- 11d, 12d: second mating surfaces
- 11e, 12e: third mating surfaces
- 13: circulation member
- 14: nut main body
- 14a: end surface
- 14b: loaded ball rolling groove (loaded rolling-element rolling groove)
- 15: notch
- 16: side-surface groove
- 18a: ball rolling groove
- 18: screw device
- 19: ball (rolling element)
- 20: scooping portion
- 21: first support member
- 21a: main body part
- 21b: protruding portion
- 22: second support member

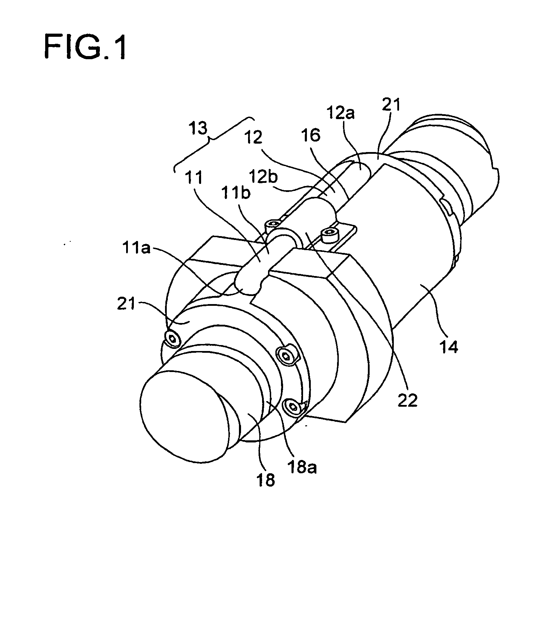

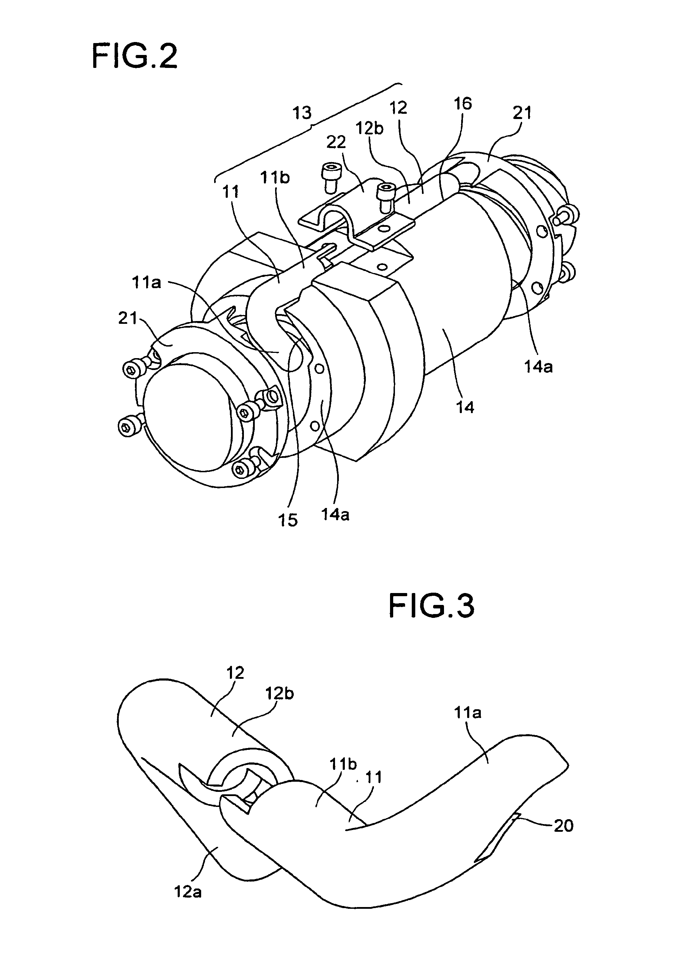

With reference to the attached drawings, an embodiment of the present invention will now be described in detail below. Fig. 1 is a perspective view of a ball screw as a rolling-element screw device according to one embodiment of the present invention, and Fig. 2 is an exploded perspective view of the ball screw. The ball screw of this embodiment belongs to an intermediate new category between a return pipe type ball screw and an end cap type ball screw. Hence, description is first made about outlines of the ball screw of this embodiment in comparison with the return pipe type ball screw and the end cap type ball screw.

The ball screw of this embodiment is apparently close to a return pipe type ball screw because a pipe is seen exposed. In the return pipe type ball screw, a leg part of the return pipe is inserted into a long hole formed in the side surface of a nut main body, which causes play around the leg part. On the other hand, in the ball screw of this embodiment, a circulation member 13 is composed of two longitudinally divided pipes, that is, a first pipe 11 and a second pipe 12, and the leg parts 11a and 12a of the first and second pipes 11 and 12, respectively, are fit to notches 15 formed in the both end surfaces 14a of the nut main body 14. Each of the notches 15 is formed in the end surface 14a of the nut main body 14 by an end mill in such a manner that the leg parts 11a and 12a of the first and second pipes 11 and 12 tilting in accordance with the lead angle are tightly fit (without clearance) to the notches. The first and second pipes 11 and 12 fit to the notches 15 from the respective end surfaces 14a of the nut main body 14, not from the side surface side of the nut main body 14. In the side surface of the nut main body 14, a side-surface groove 16 extends in the axial direction, which is formed by an end mill. This side-surface groove 16 is linked to the notches in the end surfaces 14a of the nut main body 14. In this side-surface groove 16, straight parts 11b and 12b of the first and second pipes 11 and 12 fit thereon.

Meanwhile, the end cap type ball screw is a ball screw having a pair of end caps attached to respective ends of the nut main body. A circulation member thereof consists of three members, that is, a direction change part formed in one end cap, a straight part formed in the nut main body and a direction change part formed in the other end cap. On the other hand, in the ball screw of this embodiment, as one feature, the circulation member consists of two members, that is, the first and second pipes 11 and 12, and the first and second pipes 11 and 12 are exposed at the nut main body 14.

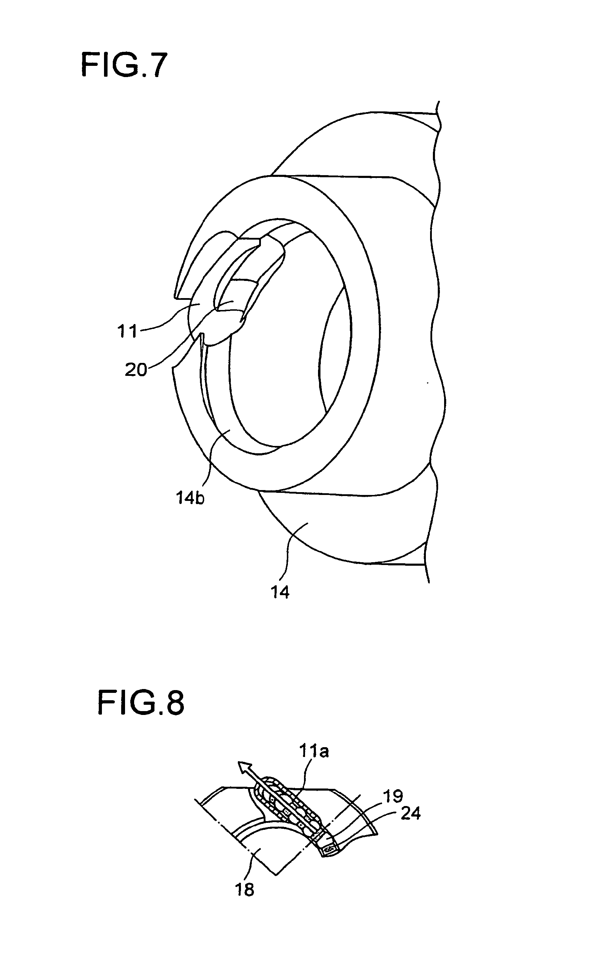

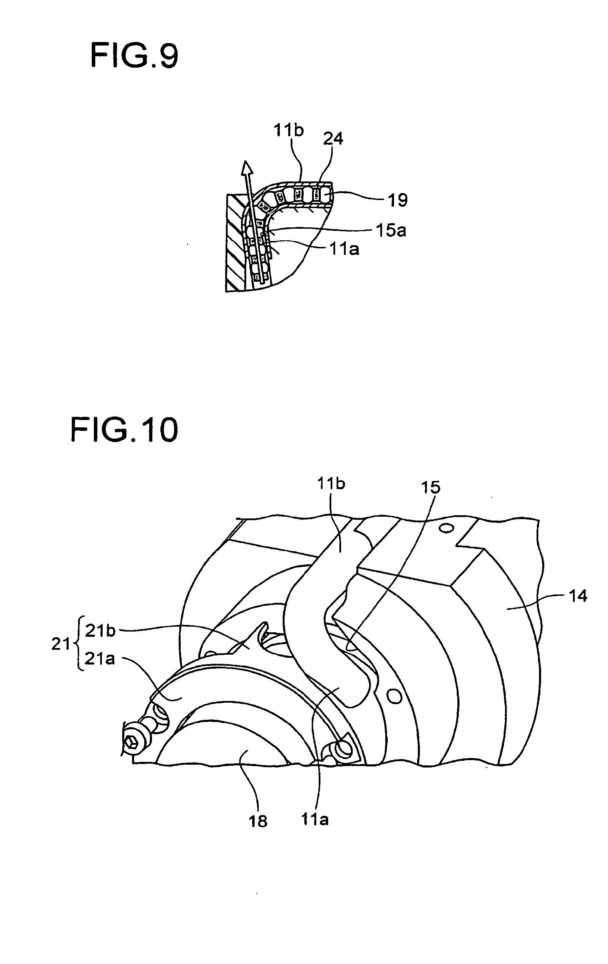

Next description is made in detail about the structure of each part of the ball screw. As illustrated in Figs. 1 and 2, the ball screw has a screw shaft 18 having an outer surface with a ball rolling groove 18a spirally formed thereon, and a nut main body 14 having an inner surface with a loaded ball rolling groove 14b spirally formed thereon facing the ball rolling groove 18a. Between the ball rolling groove 18a of the screw shaft 18 and the loaded ball rolling groove 14b of the nut main body 14, there is formed a loaded ball rolling path A, in which a plurality of balls 19 is arranged rollably. Between balls 19, a spacer 24 is provided to prevent contact between the balls 19 (see Figs. 8 and 9).

The ball rolling groove 18a spirally formed on the outer surface of the screw shaft has a predetermined lead. The cross section of the ball rolling groove 18a of the screw shaft 18 is shaped, for example, like a Gothic arch consisting of combined two circular arcs, or the like. The number of threads of the ball rolling groove 18a may be one, two, three or any number optionally. Needless to say, if the ball rolling groove has plural threads, plural circulation members and ball rolling grooves are also required in accordance with the number of the threads.

On the inner surface of the nut main body 14, the loaded ball rolling groove 14b is formed spirally facing the ball rolling groove 18a of the screw shaft 18 (see Fig. 7). Like the cross section of the ball rolling groove 18a of the screw shaft 18, the cross section of the loaded ball rolling groove 14b is also shaped like a Gothic arch consisting of combined two circular arcs, or the like.

In order to circulate each ball 19, which has rolled up to an end of the loaded ball rolling groove 14b of the nut main body 14, there is a circulation member 13 mounted on the nut main body 14. The circulation member 13 has a return path connecting one end of the loaded ball rolling groove 14b to the other. After each ball 19 has rolled up to one end of the loaded ball rolling groove 14b, the circulation member 13 scoops up the ball 19 (see Fig. 8), makes the ball 19 pass through the return path thereof, and returns the ball 19 several-turn back to the other end of the loaded ball rolling groove 14b. This circulation member 13 is composed of longitudinally divided two pipes, that is, a first pipe 11 and a second pipe 12.

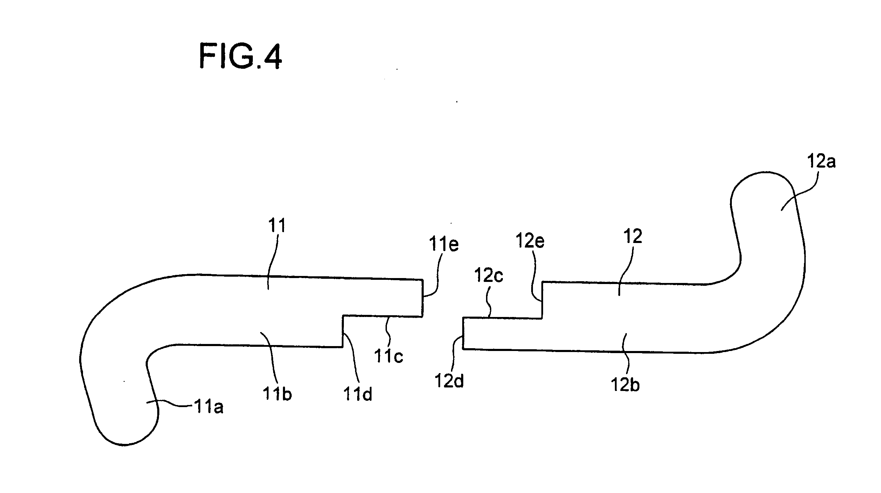

Figs. 3 and 4 illustrate the first pipe 11 and the second pipe 12. The first pipe 11 and the second pipe 12 are bent into L shape and have straight parts 11b and 12b and leg parts 11a and 12a, respectively. In the straight parts 11b and 12b, a straight path is formed. The first pipe 11 and the second pipe 12 have, at their respective ends, mating surfaces for connecting the first pipe 11 and the second pipe 12 together. The mating surfaces include first mating surfaces 11c and 12c in planes including the center lines of the first pipe 11 and the second pipe 12, respectively, second mating surfaces 11d and 12d and third mating surfaces 11e and 12e provided away from each other in the respective center line directions and at respective opposite sides of the first mating surfaces 11c and 12c. The mating surfaces are formed having steps. Meanwhile, in the leg parts 11a and 12a, there are formed direction change paths each of which extends continuously from the straight path into a curve. At ends of the leg parts 11a and 12a, respective scooping portions 20 are provided for scooping the balls 19. These first and second pipes 11 and 12 can be manufactured by bending metal pipes or injection molding of resin. Where the first and second pipes 11 and 12 are injection molded, they are divided at a division plane including the respective center lines.

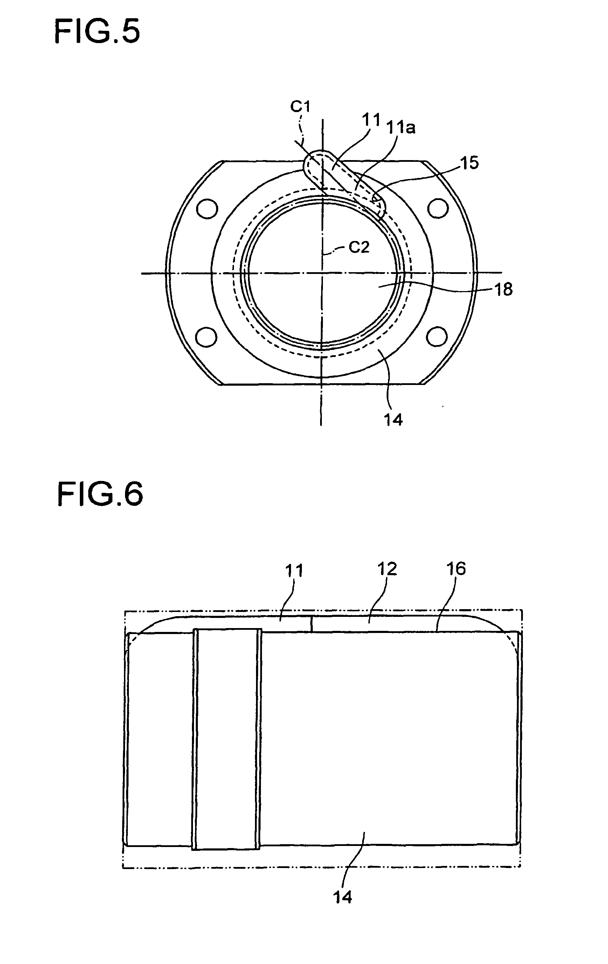

Figs. 5 and 6 illustrate the first pipe 11 and the second pipe 12 mounted on the nut main body 14. The leg parts 11a and 12a of the first pipe 11 and the second pipe 12, respectively, are fit to notches 15 in the end surfaces 14a of the nut main body 14. The straight parts 11b and 12b of the first and second pipes 11 and 12, respectively, are fit to the side-surface groove 16 of the nut main body 14. As illustrated in Fig. 5, when seen from the axial direction of the screw shaft 18, the center line C1 of the leg part 11a of the first pipe 11 is inclined by a predetermined angle relative to the vertical center line C2 of the ball screw. On the other hand, the center line of the leg part 12a of the second pipe 12 provided opposite to the first pipe 11 is also inclined by the same angle in the direction opposite to the first pipe 11.

The chain double-dashed line in Fig. 6 shows the outer diameter of the nut main body required for a conventional end cap type ball screw. In the end cap type ball screw, as a through hole for ball rolling is formed between the loaded ball rolling groove on the inner surface of the nut main body and the outer diameter of the nut main body, the loaded ball rolling groove and the outer diameter of the nut main body are required to have sufficient thickness in order to prevent their breakage. This thickness has to be a thickness corresponding to the ball diameter at the minimum, and therefore downsizing of the outer diameter of the end cap type ball screw has its limits. On the other hand, in the ball screw of this embodiment, the first and second pipes 11 and 12 are fit into the side-surface groove 16 of the nut main body 14 and the first and second pipes 11 and 12 are exposed on the nut main body 14. As the first and second pipes 11 and 12 jut out the outer surface of the nut main body 14, the outer diameter of the nut main body 14 can be reduced correspondingly.

Fig. 7 illustrates the leg part 11a of the first pipe 11 seen from the inner-diameter side of the nut main body 14. In the leg part 11a, the scooping portion 20 is provided jutting into the ball rolling groove 18a of the screw shaft 18. After each ball 19 has rolled in the ball rolling groove 18a of the screw shaft 18, this scooping portion scoops up the ball 19 and brings the ball into the leg part 11a. Here, the scooping portion 20 may be so-called a boat-bottom shaped scooping portion that does not jut into the ball rolling groove 18a of the screw shaft 18. The boat-bottom shaped scooping portion is configured to scoop up each ball 19 by gradually holding the ball 19 with both side edges of the groove.

Fig. 8 illustrates inclination of the leg part 11a seen in the axial direction of the screw shaft, while Fig. 9 illustrates inclination of the leg part 11a seen from the side-surface side of the screw shaft. The leg part 11a is arranged along the tangential direction of the ball circulation raceway of balls rolling around the screw shaft 18 as shown in Fig. 8, and also arranged along the lead angle direction as shown in Fig. 9. This arrangement of the leg part 11a allows each ball 19 to be scooped up in its travelling direction and no strain is applied from the ball 19 to the leg part 11a. Moreover, as illustrated in Fig. 9, the bottom surface 15a of the notch is inclined by an angle which conforms to the lead angle such that the leg parts 11a and 12a of the first and second pipes 11 and 12, respectively, are arranged along the tangential direction of the ball circulation raceway and along the lead angle direction.

As illustrated in Figs. 1 and 2, the first pipe 11 and the second pipe 12 are secured to the nut main body 14 with use of a pair of first support members 21 attached to respective end surfaces 14a of the nut main body 14 and a second support member 22 attached to the side surface of the nut main body 14. The first support members 21 hold tight the leg parts 11a and 12a of the first pipe 11 and the second pipe 12, respectively, while the second support member 22 holds tight a joint part of the straight parts 11b and 12b of the first pipe 11 and the second pipe 12, respectively.

Fig. 10 is a detailed view illustrating a first support member 21. The first support member 21 has a ring-shaped main body part 21a attached to one end surface 14a of the nut main body 14 and a protruding portion 21b protruding from the main body part 21a. The protruding portion 21b conforms to the outer shape of the leg parts 11a and 12a in such a manner that there is no clearance created around the leg parts 11a and 12a of the first and second pipes 11 and 12, respectively, fit into the notches 15. In other words, the first support pipe 21 is formed, for example, by resin molding and in such a manner that its protruding portion 21b is pressed and deformed to conform to the shape of the leg parts 11a and 12a of the first and second pipes 11 and 12. As thus formed, the leg parts 11a and 12a of the first and second pipes 11 and 12 are tightly secured to the nut main body 14 with no play caused around them. The first support member 21 is secured to the nut main body 14 by fastening means such as a bolt. Fig. 11 is a detailed view of the second support member 22. The second support member 22 comprises a stop band of which the center part is bent into U shape. The second support member 22 is attached to a flat notch 14c on the side surface of the nut main body 14.

When necessary, each end surface 14a of the nut main body 14 may be covered by a cover for covering the first support members. Besides, the cover may be equipped with a seal for eliminating foreign matters adhered to the screw shaft 18 and preventing leakage of lubricant from the inside of the nut main body 14.

Next description is made about an assembling method of the ball screw of this embodiment. First, there are prepared a screw shaft 18 having a ball rolling groove 18a formed thereon, a nut main body 14 having a loaded ball rolling groove 14b and notches 15, and two divided pipes, that is, a first pipe 11 and a second pipe 12. Then, the first pipe 11 is moved toward one end surface 14a of the nut main body 14 and a leg part 11a of the first pipe 11 is fit to the notch 15 formed in the one end surface 14a. In this fitting, a straight part 11b of the first pipe 11 is fit to a side-surface groove 16 of the nut main body 14. This is followed by attaching a first support member 21 to the end surface 14a of the nut main body 14 to hold the first pipe 11 with a protruding portion 21b of the first support member 21.

Next, a second pipe 12 is moved toward the other end surface 14a of the nut main body 14, and a leg part 12a of the second pipe 12 is fit to the notch 15 formed in the other end surface 14a. In this fitting, a straight part 12b of the second pipe 12 is fit to a side-surface groove 16 of the nut main body 14, and mating surfaces 11c to 11d of the straight part 11b of the first pipe 11 join with mating surfaces 12c to 12d of the straight part 12b of the second pipe 12. This is followed by attaching a first support member 21 to the end surface 14a of the nut main body 14 to hold the second pipe 12 with a protruding portion 21b of the first support member 21. Then, a second support member 22 is attached to the side surface of the nut main body 14 to hold tight the joint part of the first pipe 11 and the second pipe 12 at the mating-surface portion. Through these steps described up to this point, securing of the first pipe 11 and the second pipe 12 to the nut main body 14 is completed. After this, a ball rolling path between the screw shaft 18 and the nut main body 14, the first pipe 11 and the second pipe 12 are filled with plural balls 19 and spacers 24.

Here, the second support member 22 may be first used to hold tight the mating surfaces 11c to 11d and 12c to 12d of the straight parts 11b and 12b of the first and second pipes 11 and 12, respectively, before the first support members 21 hold tight the leg parts 11a and 12a of the first and second pipes 11 and 12, respectively.

The present invention is not limited to the above-described embodiments and can be embodied in various forms without departing from the scope of the invention. For example, the straight parts of the first and second pipes may tilt and do not have to be in parallel with the axis of the screw shaft. Besides, rollers may be used as rolling elements in place of balls, and spacers are not necessarily required between balls.

## Claims

1. A rolling-element screw device having:
a screw shaft (18) having an outer surface with a rolling-element rolling groove (18a) spirally formed thereon;
a nut main body (14) having an inner surface with a loaded rolling-element rolling groove (14b) spirally formed thereon facing the rolling-element rolling groove (18a) of the screw shaft (18);
a plurality of rolling elements (19) arranged between the rolling-element rolling groove (18a) of the screw shaft (18) and the loaded rolling-element rolling groove (14b) of the nut main body (14); and
a circulation member (13) for, after each of the rolling elements (19) rolls up to one end of the loaded rolling-element rolling groove (14b) of the nut main body (14),
scooping up the rolling element (19) and returning the rolling element (19) to an opposite end of the loaded rolling-element rolling groove (14b),
**characterized by**
the nut main body (14) having a side-surface groove (16) formed in a side surface thereof, and the side-surface groove being linked to a notch (15) formed in a one end surface of the nut main body (14) and a notch (15) formed in an axially opposite end surface of the nut main body (14),
the circulation member (13) consisting of a first pipe (11) and a second pipe (12) connected to each other, the first pipe (11) and the second pipe (12) each having a scooping portion (20) formed at one end thereof for scooping up each of the rolling elements (19) and a direction change path extending in a curve,
the first pipe (11) being fit into the notch (15) formed in the one axial end surface (14a) of the nut main body (14),
the second pipe (12) being fit into the notch (15) formed in the axially opposite end surface (14a) of the nut main body (14), and
the first pipe (11) and the second pipe (12) being fit into the side-surface groove (16) and exposed on the nut main body (14).

2. The rolling-element screw device according to claim 1,
**characterized by** further comprising:
a pair of first support members (21) having main body parts (21 a) attached to the respective end surfaces (14a) of the nut main body (14) and protruding portions (21 b) conforming to shapes of the first pipe (11) and the second pipe (12), and being configured to hold the first pipe (11) and second pipe (12) down onto the respective end surfaces (14a) of the nut main body (14); and
a second support member (22) attached to the side surface of the nut main body (14) and being configured to hold the first pipe (11) and the second pipe (12) down onto the side surface of the nut main body (14) at a position of mating surfaces of the first pipe (11) and the second pipe (12).

3. The rolling-element screw device according to claim 1 or 2, **characterized in that** mating surfaces of the first pipe (11) and the second pipe (12) include first mating surfaces (11c, 12c) positioned in planes including center lines of the first pipe (11) and the second pipe (12), second mating surfaces and third mating surfaces (11e, 11d, 12d, 12e) perpendicular to the first mating surfaces (11c, 12c), provided away from each other along the respective center lines and at respective opposite sides of the first mating surfaces (11c, 12c).

4. A method of assembling a rolling-element screw device having a plurality of rolling elements (19) arranged between a rolling-element rolling groove (18a) spirally formed on an outer surface of a screw shaft (18) and a loaded rolling-element rolling groove (14b) spirally formed on an inner surface of a nut main body (14), and a circulation member (13) for, after each of the rolling elements (19) rolls up to one end of the loaded rolling-element rolling groove (14b) of the nut main body (14), scooping up the rolling element (19) and returning the rolling element (19) to an opposite end of the loaded rolling-element rolling groove (14b), the circulation member (13) consisting of a first pipe (11) and a second pipe (12), each having a scooping portion formed at one end thereof for scooping up each of the rolling elements (19) and a direction change path extending in a curve, the method comprising:
moving the first pipe (11) toward one axial end surface (14a) of the nut main body (14) to fit the first pipe (11) into a notch (15) formed in the end surface (14a) of the nut main body (14) and the side-surface groove (16) formed in a side surface of the nut main body (14) to be linked to the notch (15);
moving the second pipe (12) toward an axially opposite end surface (14a) of the nut main body (14) to fit the second pipe (12) into a notch (15) formed in the axially opposite end surface (14a) of the nut main body (14) and the side-surface groove (16) which is also linked to the notch (15) in the axially opposite end surface (14a); and
holding the first pipe (11) and the second pipe (12) down onto the nut main body (14) with a support member (21, 22).

## Patentansprüche

1. Rollelement-Schraubenvorrichtung, die aufweist:
eine Schraubenspindel (18) mit einer Außenfläche, an der eine Rollelement-Rollnut (18a) spiralförmig ausgebildet ist;
einen Muttern-Hauptkörper (14) mit einer Innenfläche, an der eine Rollnut (14b) für belastete Rollelemente spiralförmig ausgebildet ist, die der Rollelement-Rollnut (18a) der Schraubenspindel (18) zugewandt ist;
eine Vielzahl von Rollelementen (19), die zwischen der Rollelement-Rollnut (18a) der Schraubenspindel (18) und der Rollnut (14b) für belastete Rollelemente des Muttern-Hauptkörpers (14) angeordnet sind; und
einen Zirkulationsteil (13), der nachdem jedes der Rollelemente (19) zu einem Ende der Rollnut (14b) für belastete Rollelemente des Muttern-Hauptkörpers (14) gerollt ist,
das Rollelement (19) aufnimmt und das Rollelement (19) zu einem gegenüberliegenden Ende der Rollnut (14b) für belastete Rollelemente zurückführt,
**dadurch gekennzeichnet, dass**
der Muttern-Hauptkörper (14) eine Seitenflächen-Nut (16) aufweist, die in einer Seitenfläche desselben ausgebildet ist, und die Seitenflächen-Nut mit einer Einkerbung (15),
die in einer Endfläche des Muttern-Hauptkörpers (14) ausgebildet ist, sowie mit einer Einkerbung (15) verbunden ist, die in einer axial gegenüberliegenden Endfläche des Muttern-Hauptkörpers (14) ausgebildet ist,
der Zirkulationsteil (13) aus einer ersten Röhre (11) und einer zweiten Röhre (12) besteht, die miteinander verbunden sind, die erste Röhre (11) und die zweite Röhre (12) jeweils einen Aufnahmeabschnitt (20), der an einem Ende derselben ausgebildet ist,
um jedes der Rollelemente (19) aufzunehmen, sowie einen Richtungsänderungsweg aufweisen, der in einer Kurve verläuft,
die erste Röhre (11) in die Einkerbung (15) eingepasst ist, die in der einen axialen Endfläche (14a) des Muttern-Hauptkörpers (14) ausgebildet ist,
die zweite Röhre (12) in die Einkerbung (15) eingepasst ist, die in der axial gegenüberliegenden Endfläche (14a) des Muttern-Hauptkörpers (14) ausgebildet ist, und
die erste Röhre (11) und die zweite Röhre (12) in die Seitenflächen-Nut (16) eingepasst sind und an dem Muttern-Hauptkörper (14) freiliegen.

2. Rollelement-Schraubenvorrichtung nach Anspruch 1,
**durch gekennzeichnet, dass** sie des Weiteren umfasst:
ein Paar erster Trageelemente (21), die Haupt-Körperteile (21 a), die an den jeweiligen Endflächen (14a) des Muttern-Hauptkörpers (14) angebracht sind, sowie vorstehende Abschnitte (21 b) aufweisen, die Formen der ersten Röhre (11) und der zweiten Röhre (12) entsprechen und so eingerichtet sind, dass sie die erste Röhre (11) und die zweite Röhre (12) auf die entsprechenden Endflächen (14a) des Muttern-Hauptkörpers (14) niederhalten; und
ein zweites Trageelement (22), das an der Seitenfläche des Muttern-Hauptkörpers (14) angebracht und so eingerichtet ist, dass es die erste Röhre (11) und die zweite Röhre (12) auf die Seitenfläche des Muttern-Hauptkörpers (14) an einer Position aneinander liegender Flächen der ersten Röhre (11) und der zweiten Röhre (12) niederhält.

3. Rollelement-Schraubenvorrichtung nach Anspruch 1 oder 2, **dadurch gekennzeichnet, dass** die aneinander liegender Flächen der ersten Röhre (11) und der zweiten Röhre (12) erste aneinander liegende Flächen (11c, 12c), die sich in Ebenen befinden, die Mittellinien der ersten Röhre (11) und der zweiten Röhre (12) einschließen, zweite aneinander liegende Flächen sowie dritte aneinander liegende Fläche (11e, 11d, 12d, 12e) senkrecht zu den ersten aneinander liegenden Flächen (11c, 12c) enthalten, die entlang der jeweiligen Mittellinien und an jeweiligen gegenüberliegenden Seiten der ersten aneinander liegenden Flächen (11c, 12c) voneinander entfernt vorhanden sind.

4. Verfahren zum Zusammensetzen einer Rollelement-Schraubenvorrichtung, die eine Vielzahl von Rollelementen (19), die zwischen einer Rollelement-Rollnut (18a), die spiralförmig an einer Außenfläche einer Schraubenspindel (18) ausgebildet ist, und einer Rollnut (14b) für belastete Rollelemente angeordnet sind, die spiralförmig an einer Innenfläche eines Muttern-Hauptkörpers (14) ausgebildet ist, und einen Zirkulationsteil (13) aufweist, der, nachdem jedes der Rollelemente (19) bis zu einem Ende der Rollnut (14b) für belastete Rollelemente des Muttern-Hauptkörpers (14) gerollt ist, das Rollelement (19) aufnimmt und das Rollelement (19) zu einem gegenüberliegenden Ende der Rollnut (14b) für belastete Rollelemente zurückführt, wobei der Zirkulationsteil (13) aus einer ersten Röhre (11) und einer zweiten Röhre (12) besteht, die jeweils einen Aufnahmeabschnitt, der an einem Ende derselben ausgebildet ist, um jedes der Rollelemente (19) aufzunehmen, und einen Richtungsänderungsweg aufweisen, der in einer Kurve verläuft, wobei das Verfahren umfasst:
Bewegen der ersten Röhre (11) auf eine axiale Endfläche (14a) des Muttern-Hauptkörpers (14) zu, um die erste Röhre (11) in eine Einkerbung (15), die in der Endfläche (14a) des Muttern-Hauptkörpers (14) ausgebildet ist, und die Seitenflächen-Nut (16) einzupassen, die in einer Seitenfläche des Muttern-Hauptkörpers (14) ausgebildet und mit der Einkerbung (15) verbunden ist;
Bewegen der zweiten Röhre (12) auf eine axial gegenüberliegende Endfläche (14a) des Muttern-Hauptkörpers (14) zu, um die zweite Röhre (12) in eine Einkerbung (15), die in der axial gegenüberliegenden Endfläche (14a) des Muttern-Hauptkörpers (14) ausgebildet ist, und die Seitenflächen-Nut (16) einzupassen, die ebenfalls mit der Einkerbung (15) in der axial gegenüberliegenden Endfläche (14a) verbunden ist; und
Niederhalten der ersten Röhre (11) und der zweiten Röhre (12) auf den Muttern-Hauptkörper (14) mit einem Trageelement (21, 22).

## Revendications

1. Dispositif de vis à éléments de roulement possédant :
un arbre à vis (18) possédant une surface extérieure munie d'une rainure de roulement pour éléments de roulement (18a), constituée en forme de spirale ;
un corps principal d'écrou (14) possédant une surface intérieure avec une rainure de roulement à éléments de roulement chargés (14b), constituée en forme de spirale, faisant face à la rainure de roulement à éléments de roulement (18a) de l'arbre à vis (18) ;
plusieurs éléments de roulement (19) disposés entre la rainure de roulement à éléments de roulement (18a) de l'arbre à vis (18) et la rainure de roulement à éléments de roulement chargés (14b) du corps principal d'écrou (14) ; et
un organe de circulation (13) destiné, après roulement de chacun des éléments de roulement (19) vers une extrémité de la rainure de roulement à éléments de roulement chargés (14b) du corps principal d'écrou (14), à saisir l'élément de roulement (19) et à renvoyer l'élément de roulement (19) vers une extrémité opposée de la rainure de roulement à éléments de roulement chargés (14b),
**caractérisé en ce que**
le corps principal d'écrou (14) possède une rainure de surface latérale (16) réalisée dans sa surface latérale, et la rainure de surface latérale est liée à une encoche (15) formée dans une surface d'extrémité du corps principal d'écrou (14) et une encoche (15) est réalisée dans une surface d'extrémité opposée selon une orientation axiale du corps principal d'écrou (14),
l'organe de circulation (13) est constitué d'un premier tuyau (11) et d'un second tuyau (12) reliés l'un à l'autre, le premier tuyau (11) et le second tuyau (12) possédant chacun une partie de saisie (20) réalisée à une extrémité pour saisir chacun des éléments de roulement (19), et un trajet de changement de direction se prolonge selon une courbe,
le premier tuyau (11) est introduit dans l'encoche (15) réalisée dans ladite une surface d'extrémité axiale (14a) du corps principal d'écrou (14),
le second tuyau (12) est introduit dans l'encoche (15), formée dans la surface d'extrémité opposée de manière axiale (14a) du corps principal d'écrou (14), et
le premier tuyau (11) et le second tuyau (12) sont introduits dans la rainure de surface latérale (16) et exposés sur le corps principal d'écrou (14).

2. Dispositif de vis à éléments de roulement selon la revendication 1,
**caractérisé en ce qu'**il comporte en outre :
une paire de premiers organes de support (21) possédant des parties de corps principal (21a) fixées sur les surfaces d'extrémité respectives (14a) du corps principal d'écrou (14) et des parties en saillie (21b) adaptées aux formes du premier tuyau (11) et du second tuyau (12), et étant configurés pour maintenir le premier tuyau (11) et le second tuyau (12) vers le bas sur les surfaces d'extrémité respectives (14a) du corps principal d'écrou (14) ; et
un second organe de support (22) fixé à la surface latérale du corps principal d'écrou (14) et étant configuré pour maintenir le premier tuyau (11) et le second tuyau (12) vers le bas sur la surface latérale du corps principal d'écrou (14) dans une position de surface de couplage du premier tuyau (11) et du second tuyau (12).

3. Dispositif de vis à éléments de roulement selon la revendication 1 ou 2, **caractérisé en ce que** les surfaces de couplage du premier tuyau (11) et du second tuyau (12) comportent des premières surfaces de couplage (11c, 12c) positionnées dans des plans incluant les lignes centrales du premier tuyau (11) et du second tuyau (12), des secondes surfaces de couplage et des troisièmes surfaces de couplage (11d, 12d, 12e) perpendiculaires aux premières surfaces de couplage (11c, 12c), disposées à l'écart les unes des autres selon les lignes centrales respectives et au niveau de faces opposées respectives des premières surfaces de couplage (11c, 12c).

4. Procédé d'assemblage d'un dispositif de vis à éléments de roulement possédant plusieurs éléments de roulement (19) disposés entre une rainure de roulement à éléments de roulement (18a), en forme de spirale, sur une surface extérieure d'un arbre à vis (18) et une rainure de roulement à éléments de roulement chargés (14b), en forme de spirale, sur une surface intérieure d'un corps principal d'écrou (14), et un organe de circulation (13) destiné, après que chacun des éléments de roulement (19) ait roulé jusqu'à une extrémité de la rainure de roulement à éléments de roulement chargés (14b) du corps principal d'écrou (14), à saisir l'élément de roulement (19) et à renvoyer l'élément de roulement (19) vers une extrémité opposée de la rainure de roulement à éléments de roulement chargés (14b), l'organe de circulation (13) étant constitué d'un premier tuyau (11) et d'un second tuyau (12), chacun d'eux possédant une partie de saisie constituée à l'une de ses extrémités pour saisir chacun des éléments de roulement (19) et un trajet de changement de direction se prolongeant selon une courbe, le procédé comportant les étapes consistant à :
déplacer le premier tuyau (11) en direction d'une surface d'extrémité axiale (14a) du corps principal d'écrou (14) pour introduire le premier tuyau (11) dans une encoche (15) constituée dans la surface d'extrémité (14a) du corps principal d'écrou (14) et dans la rainure de surface latérale (16) constituée dans une surface latérale du corps principal d'écrou (14) qui doit être liée à l'encoche (15) ;
déplacer le second tuyau (12) en direction d'une surface d'extrémité opposée selon une orientation axiale (14a) du corps principal d'écrou (14) pour introduire le second tuyau (12) dans une encoche (15) constituée dans la surface d'extrémité opposée de manière axiale (14a) du corps principal d'écrou (14) et dans la rainure de surface latérale (16) qui est également liée à l'encoche (15) dans la surface d'extrémité opposée de manière axiale (14a) ; et
maintenir le premier tuyau (11) et le second tuyau (12) vers le bas sur le corps principal d'écrou (14) au moyen d'un organe de support (21, 22).
